(19) Europäisches Patentamt
European Patent Office
Office européen des brevets

(11) **EP 3 378 677 B1**

(12) **EUROPEAN PATENT SPECIFICATION**

(45) Date of publication and mention
of the grant of the patent:
**26.02.2020 Bulletin 2020/09**

(21) Application number: **18159424.3**

(22) Date of filing: **01.03.2018**

(51) Int Cl.:
*B60C 9/22* *(2006.01)*    *B60C 1/00* *(2006.01)*
*C08L 7/00* *(2006.01)*    *C08K 3/22* *(2006.01)*
*C08K 5/09* *(2006.01)*    *C08L 21/00* *(2006.01)*

(54) **PNEUMATIC TIRE**

LUFTREIFEN

PNEUMATIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **21.03.2017 JP 2017054698**

(43) Date of publication of application:
**26.09.2018 Bulletin 2018/39**

(73) Proprietor: **Sumitomo Rubber Industries, Ltd. Kobe-shi, Hyogo 651-0072 (JP)**

(72) Inventors:
• **ITO, Hiroshi**
  **Kobe-shi,, Hyogo 651-0072, (JP)**
• **MITSUMATA, Yuki**
  **Kobe-shi,, Hyogo 651-0072, (JP)**

(74) Representative: **TBK
Bavariaring 4-6
80336 München (DE)**

(56) References cited:
**WO-A1-2015/137901     US-A1- 2009 114 321**

• **DATABASE WPI Week 200624 Thomson Scientific, London, GB; AN 2006-226798 XP002783176, & JP 2006 076407 A (TOYO RUBBER IND CO LTD) 23 March 2006 (2006-03-23)**
• **DATABASE WPI Week 201442 Thomson Scientific, London, GB; AN 2014-K67767 XP002783177, & KR 2014 0059490 A (HYUNDAI MOTOR CO LTD) 16 May 2014 (2014-05-16)**
• **DATABASE WPI Week 200902 Thomson Scientific, London, GB; AN 2009-A41525 XP002783178, & KR 2008 0061701 A (HYOSUNG CORP) 3 July 2008 (2008-07-03)**

EP 3 378 677 B1

**Description**

TECHNICAL FIELD

The present invention relates to a pneumatic tire.

BACKGROUND ART

Steel cords are used in automobile tires to improve durability, handling stability, and other properties. It is then necessary to provide a strong and stable adhesion between the steel cords and the steel cord topping rubber composition to improve particularly durability. A known technique to stabilize the adhesion is to incorporate a cobalt salt of an organic acid into a cord topping rubber composition. Nevertheless, further improvement is needed.

SUMMARY OF INVENTION

TECHNICAL PROBLEM

The present invention aims to solve the problem and provide a pneumatic tire having excellent durability.

SOLUTION TO PROBLEM

The present inventors have conducted extensive research into the problem, resulting in focusing attention on steel belt layers and their neighboring tire components (e.g. adjacent components). Accordingly, they have found that tires provide excellent durability in which the stearic acid content of the steel belt layer and the stearic acid and zinc oxide contents of the cap ply layer and the carcass layer satisfy predetermined relationships. This finding has led to the completion of the present invention.

The present invention relates to a pneumatic tire, including at least one steel belt layer, at least one cap ply layer, and at least one carcass layer, the steel belt layer including a steel belt topping rubber composition which has a zinc oxide content of 8.0 parts by mass or more per 100 parts by mass of a rubber component in the rubber composition, the cap ply layer including a cap ply topping rubber composition, the carcass layer including a carcass topping rubber composition, the cap ply topping rubber composition and the carcass topping rubber composition both having stearic acid and zinc oxide contents, each per 100 parts by mass of a rubber component in the rubber composition, which satisfy the following relationships (1) and (2):

(1): stearic acid content $\leq$ 3.0 parts by mass,
(2): stearic acid content/zinc oxide content $\leq$ 0.5.

Preferably, the steel belt layer, the cap ply layer, and the carcass layer have respective thicknesses which satisfy the following relationship (3):

$$(3): \text{ (thickness of carcass layer + thickness of cap ply layer)/thickness of steel belt layer} \leq 1.5.$$

ADVANTAGEOUS EFFECTS OF INVENTION

The pneumatic tire of the present invention includes at least one steel belt layer, at least one cap ply layer, and at least one carcass layer, wherein the steel belt layer includes a steel belt topping rubber composition which has a predetermined zinc oxide content; and the cap ply layer includes a cap ply topping rubber composition, and the carcass layer includes a carcass topping rubber composition, wherein the cap ply topping rubber composition and the carcass topping rubber composition both have stearic acid and zinc oxide contents which satisfy relationships (1) and (2). Such a pneumatic tire provides excellent durability.

BRIEF DESCRIPTION OF DRAWINGS

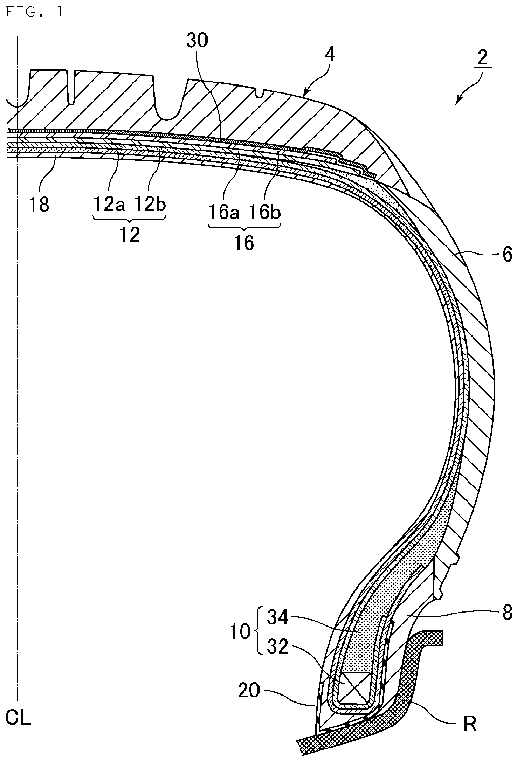

Fig. 1 shows an exemplary schematic cross-sectional view of a pneumatic tire.

DESCRIPTION OF EMBODIMENTS

The pneumatic tire includes at least one steel belt layer, at least one cap ply layer, and at least one carcass layer. Further, the steel belt layer includes a steel belt topping rubber composition which has a predetermined zinc oxide content. Further, the cap ply layer includes a cap ply topping rubber composition, and the carcass layer includes a carcass topping rubber composition, and these cap ply and carcass topping rubber compositions both have stearic acid and zinc oxide contents which satisfy relationships (1) and (2).

Herein, the amounts of the chemicals in the steel belt topping, cap ply topping, or carcass topping rubber composition all refer to the theoretical amounts present in the rubber composition before curing (the theoretical amounts present in the unvulcanized topping rubber composition of the tire component). Herein, the term "theoretical amount" refers to the amount of a chemical introduced into a kneading machine in the preparation of a rubber composition.

(Steel belt layer)

Each steel belt layer is prepared by coating steel cords with a steel belt topping rubber composition containing a predetermined amount of zinc oxide.

The structure of the steel cords is not particularly limited, and examples include steel cords having a $1 \times n$ single strand structure, steel cords having a $k + m$ layer strand structure, steel cords having a $1 \times n$ bundle structure, and steel cords having a $m \times n$ multi-strand structure. The steel cords may be plated with, for example, brass or Zn.

The steel belt topping rubber composition has a zinc oxide content of 8.0 parts by mass or more per 100 parts by mass of the rubber component. The incorporation of the predetermined amount of zinc oxide can prevent deterioration of the adhesion between the steel cords and the rubber composition. The zinc oxide content is preferably 10.0 parts by mass or more. The upper limit of the content is not particularly critical, but may suitably be adjusted to 12.0 parts by mass or less, which is economically advantageous because a further improvement effect cannot any longer be expected by an increased amount.

The zinc oxide may be a conventional one. Examples include products of Mitsui Mining & Smelting Co., Ltd., Toho Zinc Co., Ltd., HakusuiTech Co., Ltd., Seido Chemical Industry Co., Ltd., and Sakai Chemical Industry Co., Ltd.

Non-limiting examples of rubbers that may be used in the rubber component of the steel belt topping rubber composition include diene rubbers such as isoprene-based rubbers, e.g. natural rubber (NR) and polyisoprene rubber (IR), polybutadiene rubber (BR), styrene-butadiene rubber (SBR), styrene-isoprene-butadiene rubber (SIBR), chloroprene rubber (CR), and acrylonitrile butadiene rubber (NBR). Among these, isoprene-based rubbers are preferred because they provide good durability.

Examples of the NR as an isoprene-based rubber include those commonly used in the tire industry, such as SIR20, RSS#3, and TSR20. Examples of the IR include those commonly used in the tire industry, such as IR2200.

In the steel belt topping rubber composition, the isoprene-based rubber content based on 100% by mass of the rubber component is preferably 35% by mass or more, more preferably 60% by mass or more, still more preferably 80% by mass or more, particularly preferably 85% by mass or more, and may be 100% by mass. An isoprene-based rubber content within the range indicated above leads to good durability.

The steel belt topping rubber composition preferably contains carbon black. Non-limiting examples of the carbon black include N134, N110, N220, N234, N219, N339, N330, N326, N351, N550, and N762. These types of carbon black may be used alone, or two or more of these may be used in combination.

The carbon black used in the steel belt topping rubber composition preferably has a nitrogen adsorption specific surface area ($N_2SA$) of 20 $m^2/g$ or more, more preferably 50 $m^2/g$ or more. A $N_2SA$ of not less than the lower limit tends to lead to good durability. The $N_2SA$ is also preferably 150 $m^2/g$ or less, more preferably 100 $m^2/g$ or less. A $N_2SA$ of not more than the upper limit tends to lead to good dispersion of carbon black.

Herein, the nitrogen adsorption specific surface area of the carbon black is determined in accordance with JIS K6217-2:2001.

In the steel belt topping rubber composition, the carbon black content per 100 parts by mass of the rubber component is preferably 30 parts by mass or more, more preferably 50 parts by mass or more. A carbon black content of not less than the lower limit tends to provide sufficient reinforcement and thus good durability. The carbon black content is also preferably 120 parts by mass or less, more preferably 90 parts by mass or less. A carbon black content of not more than the upper limit tends to lead to reduced heat build-up and thus good durability.

Examples of the carbon black include products of Asahi Carbon Co., Ltd., Cabot Japan K.K., Tokai Carbon Co., Ltd., Mitsubishi Chemical Corporation, Lion Corporation, NSCC Carbon Co., Ltd, and Columbia Carbon.

In the steel belt topping rubber composition, the stearic acid content per 100 parts by mass of the rubber component is preferably 0.2 parts by mass or less. Reducing the stearic acid content can prevent deterioration of the adhesion between the steel cords and the rubber composition. The stearic acid content is more preferably 0.1 parts by mass or less, still more preferably 0.01 parts by mass or less, and may be zero.

The stearic acid used may be a conventional one. Examples include products of NOF Corporation, Kao Corporation, Wako Pure Chemical Industries, Ltd., and Chiba Fatty Acid Co., Ltd.

(Cap ply layer, Carcass layer)

Each cap ply layer is prepared by coating cords with a cap ply topping rubber composition which has stearic acid and zinc oxide contents satisfying relationships (1) and (2). Each carcass layer is prepared by coating cords with a carcass topping rubber composition which has stearic acid and zinc oxide contents satisfying relationships (1) and (2).

Examples of the cords used to form the cap ply layer include organic fiber cords. Preferred examples of the organic fiber include polyester fibers, nylon fibers, rayon fibers, polyethylene naphthalate fibers, and aramid fibers. Examples of the cords used to form the carcass layer include fiber cords and steel cords.

The cap ply topping rubber composition and the carcass topping rubber composition both have a stearic acid content, per 100 parts by mass of the rubber component in the cap ply or carcass topping rubber composition, which satisfies the following relationship (1):

(1): stearic acid content ≤ 3.0 parts by mass.

When the topping rubber compositions of the cap ply and carcass layers located near the steel belt layer are each adjusted to have a stearic acid content that is less than or equal to a predetermined value, a deterioration in the adhesion between the steel cords and the topping rubber composition caused by migration of stearic acid can be prevented. The stearic acid content is preferably 2.0 parts by mass or less. The lower limit of the stearic acid content is not particularly critical, but is preferably 1.0 part by mass or more, more preferably 1.5 parts by mass or more, in view of the cure rate of the rubber.

The cap ply topping rubber composition and the carcass topping rubber composition both have a ratio of the stearic acid content to the zinc oxide content, each per 100 parts by mass of the rubber component in the cap ply or carcass topping rubber composition, which satisfies the following relationship (2): (2): stearic acid content/zinc oxide content ≤ 0.5.

When the zinc oxide contents of the topping rubber compositions of the cap ply and carcass layers located near the steel belt layer are increased to adjust the stearic acid content/zinc oxide content ratio to a predetermined value or lower, the impact of deterioration of the adhesion between the steel cords and the topping rubber composition caused by migration of stearic acid can be reduced. The stearic acid content/zinc oxide content ratio is preferably 0.3 or less. The lower limit of the ratio is not particularly critical.

The stearic acid and zinc oxide used may be conventional ones. Examples include those mentioned above.

Non-limiting examples of rubbers that may be used in the rubber component of the cap ply or carcass topping rubber composition include those mentioned above. Among other rubbers, isoprene-based rubbers and SBR are preferred because they provide good durability.

Examples of the isoprene-based rubbers include those mentioned above. Examples of the SBR include those produced by known techniques such as anionic polymerization, solution polymerization, or emulsion polymerization, and those which have been modified with polar groups having affinity for fillers. The SBR may be a product manufactured or sold by, for example, Sumitomo Chemical Co., Ltd., JSR Corporation, Asahi Kasei Corporation, or Zeon Corporation.

In the cap ply or carcass topping rubber composition, the isoprene-based rubber content based on 100% by mass of the rubber component is preferably 30% by mass or more, more preferably 55% by mass or more. The isoprene-based rubber content is preferably 90% by mass or less, more preferably 80% by mass or less. An isoprene-based rubber content within the range indicated above leads to good durability.

In the cap ply or carcass topping rubber composition, the SBR content based on 100% by mass of the rubber component is preferably 5% by mass or more, more preferably 20% by mass or more. The SBR content is preferably 50% by mass or less, more preferably 40% by mass or less. An SBR content within the range indicated above leads to good durability.

The cap ply or carcass topping rubber composition preferably contains carbon black. Examples of the carbon black include those mentioned above.

The carbon black used in the cap ply or carcass topping rubber composition preferably has a nitrogen adsorption specific surface area ($N_2SA$) of 20 $m^2$/g or more, more preferably 50 $m^2$/g or more. A $N_2SA$ of not less than the lower limit tends to lead to good durability. The $N_2SA$ is also preferably 150 $m^2$/g or less, more preferably 100 $m^2$/g or less. A $N_2SA$ of not more than the upper limit tends to lead to good dispersion of carbon black.

In the cap ply or carcass topping rubber composition, the carbon black content per 100 parts by mass of the rubber component is preferably 15 parts by mass or more, more preferably 30 parts by mass or more. A carbon black content of not less than the lower limit tends to provide sufficient reinforcement and thus good durability. The carbon black content is also preferably 80 parts by mass or less, more preferably 60 parts by mass or less. A carbon black content of not more than the upper limit tends to lead to reduced heat build-up and thus good durability.

In addition to the above-mentioned components, the steel belt, cap ply, and carcass topping rubber compositions may contain compounding agents conventionally used in the rubber industry. Examples include other reinforcing fillers, waxes, antioxidants, age resistors, softeners, vulcanizing agents, and vulcanization accelerators.

(Pneumatic tire)

The pneumatic tire includes at least one steel belt layer, at least one cap ply layer, and at least one carcass layer. Since the steel belt layer, cap ply layer, and carcass layer have the above-described structures, the tire provides excellent durability.

Fig. 1 shows an example of a pneumatic tire. The vertical direction corresponds to the radial direction of the tire, the horizontal direction corresponds to the axis direction of the tire, and the direction perpendicular to the drawing corresponds to the circumferential direction of the tire. The dash-dot line CL represents the equatorial plane of the tire. The shape of the tire is symmetrical to the equatorial plane, except for the tread patterns. The tire shown in this figure is mounted on a rim R.

The pneumatic tire 2 includes a tread 4, a pair of sidewalls 6, a pair of clinches 8, a pair of beads 10, a carcass 12, a belt 16, an innerliner 18, a pair of chafers 20, and a cap ply (band) 30.

The tread 4 has a radially outwardly convex shape. The sidewall 6 extends substantially inwardly from the end of the tread 4 in the radial direction. The radially outer portion of the sidewall 6 is bonded to the tread 4. The radially inner portion of the sidewall 6 is bonded to the clinch 8. The sidewall 6 is located axially outward of the carcass 12.

The clinch 8 is located radially inward of the sidewall 6. The clinch 8 is located axially outward of the bead 10 and the carcass 12. The bead 10 is located axially inward of the clinch 8. The bead 10 includes a core 32 and an apex 34 extending radially outwardly from the core 32.

The carcass 12 consists of a first ply 12a and a second ply 12b. The first ply 12a and the second ply 12b are provided to extend between the beads 10 on either side along the tread 4 and the sidewalls 6. The carcass 12 may be formed of one ply.

The belt 16 is stacked on the outer side of the carcass 12. The belt 16 reinforces the carcass 12. In this embodiment, the belt 16 consists of a first layer 16a and a second layer 16b. The cap ply 30 is located radially outward of the belt 16. The cap ply 30 consists of cords such as organic fiber cords and a topping rubber.

The innerliner 18 is located on the inner side of the carcass 12. The innerliner 18 is bonded to the inner surface of the carcass near the equatorial plane. The innerliner 18 maintains the internal pressure of the tire 2. The chafer 20 is located near the bead 10. The chafer 20 is in contact with the rim R to provide protection near the bead 10.

The pneumatic tire may be produced by conventional methods including the following method.

First, the components other than crosslinking agents and vulcanization accelerators are introduced (added) and kneaded in a rubber kneading machine such as a Banbury mixer or open roll mill (base kneading step) . Then, a crosslinking agent and a vulcanization accelerator were introduced (added) and kneaded with the kneaded mixture, whereby an unvulcanized steel belt, cap ply, or carcass topping rubber composition can be prepared.

Subsequently, cords are coated with each of the unvulcanized rubber compositions and extruded into the shape of a steel belt layer, cap ply layer, or carcass layer. The thus prepared components are assembled with other tire components on a tire building machine to build an unvulcanized tire (or a raw cover). Then, the unvulcanized tire is heat pressed in a vulcanizer to produce a pneumatic tire.

In a preferred embodiment of the pneumatic tire, the steel belt layer, cap ply layer, and carcass layer have respective thicknesses which satisfy relationship (3) below. When the ratio of the sum of the thicknesses of the at least one carcass layer and the at least one cap ply layer to the thickness of the at least one steel belt layer is adjusted to 1.5 or less, the resulting tire provides significantly improved durability. (3): (thickness of carcass layer + thickness of cap ply layer)/thickness of steel belt layer $\leq 1.5$

The ratio is more preferably 1.3 or less. Moreover, the lower limit of the ratio is not particularly critical.

The thickness of the steel belt layer is preferably 1.5 to 4.0 mm, more preferably 2.0 to 3.5 mm. The thickness of the cap ply layer is preferably 0.5 to 2.0 mm, more preferably 1.0 to 1.5 mm. The thickness of the carcass layer is preferably 0.5 to 2.0 mm, more preferably 1.0 to 1.5 mm. When the thicknesses are adjusted within the ranges indicated above, the resulting tire provides significantly improved durability.

The thickness of the steel belt layer, cap ply layer, or carcass layer refers to the thickness of the steel belt layer, cap ply layer, or carcass layer measured in the equatorial plane of the tire. In the case where the layer consists of two or more layers, it refers to the total thickness of the layers. For example, if the carcass layer consists of two or more layers, the thickness of the carcass layer means the total thickness of the layers.

The pneumatic tire of the present invention is suitable for passenger vehicles, large passenger vehicles, large SUVs, heavy load vehicles such as trucks and buses, or light trucks. The tire may be used as a summer tire or cold weather tire for these vehicles.

EXAMPLES

The chemicals used in the examples and comparative examples are listed below.

NR: RSS3
SBR: emulsion-polymerized SBR
Carbon black 1: $N_2SA$ 78 $m^2/g$
Carbon black 2: $N_2SA$ 84 $m^2/g$
Oil: Diana Process NH-70S available from Idemitsu Kosan Co., Ltd.
Zinc oxide: zinc oxide #1 available from Mitsui Mining & Smelting Co., Ltd.
Stearic acid: stearic acid "TSUBAKI" available from NOF Corporation
Cobalt stearate: cost-F (cobalt content: 9.5% by mass) available from Dainippon Ink and Chemicals
Heat resistant antioxidant: Antigene RD available from Sumitomo Chemical Co., Ltd.
Sulfur: Seimi OT (10% oil-containing insoluble sulfur) available from Nippon Kanryu Industry Co., Ltd.
Vulcanization accelerator 1: NOCCELER NS (TBBS) available from Ouchi Shinko Chemical Industrial Co., Ltd.
Vulcanization accelerator 2: NOCCELER DZ (DCBS) available from Ouchi Shinko Chemical Industrial Co., Ltd.

<Examples and Comparative Examples>

(Production of pneumatic tire)

According to each of the formulations indicated in Tables 1 and 2, the materials other than the vulcanizing agent (sulfur) and vulcanization accelerator were kneaded in a Banbury mixer at 160°C for five minutes to give a kneaded mixture. Next, the sulfur and vulcanization accelerator were added to the kneaded mixture, and they were kneaded in an open roll mill at 105°C for three minutes to prepare an unvulcanized steel belt, cap ply, or carcass topping rubber composition.
The unvulcanized rubber compositions were formed into the respective tire components. The steel belt layer, cap ply layer, and carcass layer were prepared by coating the upper and lower sides of respective cords (cords for the steel belt layer: $1 \times 2 \times 0.30$, cords for the cap ply layer: 1400 dtex/2-N66, cords for the carcass layer: 1670 dtex/2-PET) with the respective topping rubber compositions by pressure bonding. Then, unvulcanized tires were built according to the combinations indicated in Tables 3 and 4. They were vulcanized at 170°C for 12 minutes to prepare test tires as illustrated in Fig. 1 (size: 195/65R15). The thicknesses of the steel belt layer, cap ply layer, and carcass layer are shown in Tables 3 and 4.

(Evaluation)

The test tires thus prepared were evaluated as described below. Tables 3 and 4 show the evaluation results.

<Durability test>

The test tire (hygrothermally aged tire) was run on a drum under overload conditions in which the load was 140% of the maximum load (maximum air pressure) defined in the JIS standard, and then the distance was determined at which appearance abnormalities or abnormal sound, such as a bulge in the tread portion, occurred. The distance for each formulation example is expressed as an index, with Comparative Example 1 set equal to 100. A higher index indicates better tire durability.

[Table 1]

Carcass or cap ply topping rubber composition

| | | A1 | A2 | A3 | A4 | A5 | A6 | A7 | A8 |
|---|---|---|---|---|---|---|---|---|---|
| Formulation (parts by mass) | NR | 70.0 | 70.0 | 70.0 | 70.0 | 60.0 | 70.0 | 70.0 | 70.0 |
| | SBR | 30.0 | 30.0 | 30.0 | 30.0 | 40.0 | 30.0 | 30.0 | 30.0 |
| | Carbon black 1 | 45.0 | 45.0 | 45.0 | 45.0 | 55.0 | 45.0 | 45.0 | 45.0 |
| | Oil | 2.0 | 2.0 | 2.0 | 2.0 | 2.0 | 2.0 | 2.0 | 2.0 |
| | Heat resistant antioxidant | 1.0 | 1.0 | 1.0 | 1.0 | 1.0 | 1.0 | 1.0 | 1.0 |
| | Stearic acid | 1.5 | 3.0 | 1.5 | 1.5 | 1.5 | 4.0 | 1.5 | 3.0 |
| | Zinc oxide | 3.0 | 6.0 | 4.5 | 10.0 | 3.0 | 8.0 | 2.0 | 5.0 |
| | Sulfur | 4.0 | 4.0 | 4.0 | 4.0 | 4.0 | 4.0 | 4.0 | 4.0 |
| | Vulcanization accelerator 1 | 1.0 | 1.0 | 1.0 | 1.0 | 1.0 | 1.0 | 1.0 | 1.0 |
| Stearic acid/Zinc oxide | | 0.5 | 0.5 | 0.3 | 0.2 | 0.5 | 0.5 | 0.8 | 0.6 |

[Table 2]

Steel belt topping rubber composition

| | | B1 | B2 | B3 | B4 | B5 | B6 |
|---|---|---|---|---|---|---|---|
| Formulation (parts by mass) | NR | 100.0 | 100.0 | 100.0 | 100.0 | 100.0 | 100.0 |
| | Carbon black 2 | 70.0 | 70.0 | 70.0 | 80.0 | 70.0 | 70.0 |
| | Process oil | 4.0 | 4.0 | 4.0 | 4.0 | 4.0 | 4.0 |
| | Heat resistant antioxidant | 1.0 | 1.0 | 1.0 | 1.0 | 1.0 | 1.0 |
| | Cobalt stearate | 1.0 | 1.0 | 1.0 | 1.0 | 1.0 | 1.0 |
| | Zinc oxide | 8.0 | 10.0 | 12.0 | 8.0 | 7.0 | 14.0 |
| | Sulfur | 6.0 | 6.0 | 6.0 | 6.0 | 6.0 | 6.0 |
| | Vulcanization accelerator 2 | 1.0 | 1.0 | 1.0 | 1.0 | 1.0 | 1.0 |

[Table 3]

(Cases in which the layers in each example have the same thicknesses)

| | | Example | | | | | | | | | | |
|---|---|---|---|---|---|---|---|---|---|---|---|---|
| | | 1 | 2 | 3 | 4 | 5 | 6 | 7 | 8 | 9 | 10 | 11 |
| Cap ply layer | Cap ply topping rubber composition | A1 | A1 | A2 | A1 | A2 | A3 | A4 | A5 | A1 | A1 | A1 |
| | Thickness (mm) | 1.0 | ← | ← | ← | ← | ← | ← | ← | ← | ← | ← |
| Carcass layer | Carcass topping rubber composition | A1 | A1 | A2 | A2 | A1 | A3 | A4 | A5 | A1 | A1 | A1 |
| | Thickness (mm) | 1.0 | ← | ← | ← | ← | ← | ← | ← | ← | ← | ← |
| Steel belt layer | Steel belt topping rubber composition | B1 | B2 | B2 | B2 | B2 | B2 | B2 | B2 | B3 | B4 | B6 |
| | Thickness (mm) | 2.0 | ← | ← | ← | ← | ← | ← | ← | ← | ← | ← |
| Evaluation | Drum durability | 110 | 115 | 110 | 115 | 115 | 118 | 120 | 115 | 115 | 108 | 115 |

| | | Comparative Example | | | | | |
|---|---|---|---|---|---|---|---|
| | | 1 | 2 | 3 | 4 | 5 | 6 |
| Cap ply layer | Cap ply topping rubber composition | A1 | A6 | A1 | A1 | A1 | A7 |
| | Thickness (mm) | 1.0 | ← | ← | ← | ← | ← |
| Carcass layer | Carcass topping rubber composition | A6 | A1 | A1 | A7 | A8 | A1 |
| | Thickness (mm) | 1.0 | ← | ← | ← | ← | ← |
| Steel belt layer | Steel belt topping rubber composition | B1 | B1 | B5 | B2 | B2 | B2 |
| | Thickness (mm) | 2.0 | ← | ← | ← | ← | ← |
| Evaluation | Drum durability | 100 | 100 | 90 | 95 | 92 | 95 |

[Table 4]

| (Cases in which the layers in each example have different thicknesses) | | Example | | | | | | |
| --- | --- | --- | --- | --- | --- | --- | --- | --- |
| | | 12 | 13 | 14 | 15 | 16 | 17 | 18 |
| Cap ply layer | Cap ply topping rubber composition | A1 | A1 | A1 | A1 | A1 | A1 | A1 |
| | Thickness (mm) | 1.0 | 2.0 | 1.0 | 2.0 | 2.0 | 2.0 | 2.0 |
| Carcass layer | Carcass topping rubber composition | A1 | A1 | A1 | A1 | A1 | A1 | A1 |
| | Thickness (mm) | 2.0 | 1.0 | 1.0 | 2.0 | 2.5 | 2.0 | 3.0 |
| Steel belt layer | Steel belt topping rubber composition | B2 | B2 | B2 | B2 | B2 | B2 | B2 |
| | Thickness (mm) | 2.0 | 2.0 | 1.6 | 3.0 | 3.0 | 2.0 | 3.0 |
| (thickness of carcass layer + thickness of cap ply layer)/ thickness of steel belt layer | | 1.5 | 1.5 | 1.3 | 1.3 | 1.5 | 2.0 | 1.7 |
| Evaluation | Drum durability | 105 | 105 | 108 | 110 | 106 | 101 | 102 |

Excellent durability was exhibited by the pneumatic tires of the examples which included at least one steel belt layer, at least one cap ply layer, and at least one carcass layer, wherein the steel belt topping rubber composition had a predetermined zinc oxide content, and the cap ply and carcass topping rubber compositions had stearic acid and zinc oxide contents satisfying relationships (1) and (2), as compared to the comparative examples.

REFERENCE SIGNS LIST

2       pneumatic tire

4       tread

6       sidewall

8       clinch

10      bead

12      carcass

12a     first ply

12b     second ply

16      belt

16a     first layer

16b     second layer

18      innerliner

20      chafer

30    cap ply

32    core

34    apex

The present invention provides a pneumatic tire having excellent durability. Provided is a pneumatic tire including at least one steel belt layer, at least one cap ply layer, and at least one carcass layer, the steel belt layer including a steel belt topping rubber composition which has a zinc oxide content of 8.0 parts by mass or more per 100 parts by mass of the rubber component, the cap ply layer including a cap ply topping rubber composition, the carcass layer including a carcass topping rubber composition, the cap ply topping rubber composition and the carcass topping rubber composition both having stearic acid and zinc oxide contents, each per 100 parts by mass of the rubber component, which satisfy the following relationships (1) and (2):

(1): stearic acid content $\leq$ 3.0 parts by mass,
(2): stearic acid content/zinc oxide content $\leq$ 0.5.

## Claims

1.  A pneumatic tire, comprising at least one steel belt layer, at least one cap ply layer, and at least one carcass layer, the steel belt layer comprising a steel belt topping rubber composition which has a zinc oxide content of 8.0 parts by mass or more per 100 parts by mass of a rubber component in the rubber composition, the cap ply layer comprising a cap ply topping rubber composition, the carcass layer comprising a carcass topping rubber composition, the cap ply topping rubber composition and the carcass topping rubber composition both having stearic acid and zinc oxide contents, each per 100 parts by mass of a rubber component in the rubber composition, which satisfy the following relationships (1) and (2):

    (1): stearic acid content $\leq$ 3.0 parts by mass,
    (2): stearic acid content/zinc oxide content $\leq$ 0.5.

2.  The pneumatic tire according to claim 1,
    wherein the steel belt layer, the cap ply layer, and the carcass layer have respective thicknesses which satisfy the following relationship (3):
    (3): (thickness of carcass layer + thickness of cap ply layer)/thickness of steel belt layer $\leq$ 1.5.

## Patentansprüche

1.  Pneumatischer Reifen, der zumindest eine Stahlbandschicht, zumindest eine Zwischenbauschicht und zumindest eine Karkassenschicht umfasst,
    wobei die Stahlbandschicht eine Stahlbandbelag-Kautschukzusammensetzung umfasst, welche einen Zinkoxidgehalt von 8,0 Masseteilen oder mehr pro 100 Masseteilen eines Kautschukbestandteils in der Kautschukzusammensetzung aufweist,
    die Zwischenbauschicht eine Zwischenbaubelag-Kautschukzusammensetzung umfasst, die Karkassenschicht eine Karkassenbelag-Kautschukzusammensetzung umfasst, die Zwischenbaubelag-Kautschukzusammensetzung und die Karkassenbelag-Kautschukzusammensetzung jeweils Gehalte an Stearinsäure und Zinkoxid aufweisen, die jeweils pro 100 Masseteilen eines Kautschukbestandteils der Kautschukzusammensetzung die folgenden Beziehungen (1) und (2) erfüllen:

    (1): Stearinsäuregehalt $\leq$ 3,0 Masseteile,
    (2): Stearinsäuregehalt/Zinkoxidgehalt $\leq$ 0,5.

2.  Pneumatischer Reifen nach Anspruch 1,
    wobei die Stahlbandschicht, die Zwischenbauschicht und die Karkassenschicht jeweilige Dicken aufweisen, die die folgende Beziehung (3) erfüllen:
    (3): (Dicke der Karkassenschicht + Dicke der Zwischenbauschicht)/Dicke der Stahlbandschicht $\leq$ 1,5.

**Revendications**

1. Pneu comprenant au moins une couche de ceinture d'acier, au moins une couche de nappe sommet, et au moins une couche de carcasse,

la couche de ceinture d'acier comprenant une composition en caoutchouc de gommage de ceinture d'acier qui a une teneur en oxyde de zinc de 8,0 parties en masse ou plus pour 100 parties en masse de composant caoutchouc dans la composition de caoutchouc,

la couche de nappe sommet comprenant une composition en caoutchouc de gommage de nappe sommet, la couche de carcasse comprenant une composition de caoutchouc de gommage de carcasse, la composition de caoutchouc de gommage de nappe sommet et la composition de caoutchouc de gommage de carcasse ayant toutes deux des teneurs en acide stéarique et en oxyde de zinc, dans chaque cas pour 100 parties en masse de composant caoutchouc dans la composition de caoutchouc, qui satisfont aux relations (1) et (2) suivantes :

(1) : teneur en acide stéarique $\leq$ 3,0 parties en masse,
(2) : teneur en acide stéarique / teneur en oxyde de zinc $\leq$ 0,5.

2. Pneu selon la revendication 1, dans lequel la couche de ceinture d'acier, la couche de nappe sommet et la couche de carcasse ont des épaisseurs respectives qui satisfont à la relation (3) suivante :
(3) : (épaisseur de la couche de carcasse + épaisseur de la couche de nappe sommet) / épaisseur de la couche de ceinture d'acier $\leq$ 1,5.

FIG. 1